# EUROPEAN PATENT APPLICATION

(11) **EP 2 365 624 A1**
(43) Date of publication of application: **14.09.2011**
(21) Application number: 10156424.3
(22) Date of filing: 12.03.2010
(51) Int. Cl.: H02M 3/335

(54) **Power conversion system and start-up circuit**

(71) Applicant: NXP B.V., 5656 AG Eindhoven (NL)
(72) Inventor: Duerbaum, Thomas Antonius, 5656 AE, Eindhoven (NL); Kuebrich, Johann Baptist Daniel, 5656 AE, Einhoven (DE); Schmid, Markus, 5656 AE, Eindhoven (NL); Hoogzaad, Gian, 5656 AE, Eindhoven (NL); Halberstadt, Hans, 5656 AE, Eindhoven (NL); Pansier, Frans, 5656 AE, Eindhoven (NL)
(74) Representative: Krott, Michel

(57) **Abstract**

Embodiments of the present invention relate to a power conversion system, in particular a switched mode power supply, SMPS, which comprises a control circuit and a rectifier circuit connectable to an alternating main power supply. The rectifier circuit is directly connected to the control circuit for supplying the control circuit with rectified power. The power conversion system further comprises a start-up circuit having a supply capacitor which is connected to the control circuit for providing a start-up voltage, and further to the rectifier circuit.

## Description

### FIELD OF THE INVENTION

The present invention relates to power conversion systems such as switch or switched mode power supplies (SMPS), and more particular to a start-up circuit or system of a power conversion system such as a switched mode power supply, SMPS. Further, the invention relates to a method of operating a switched mode power supply, SMPS.

### BACKGROUND OF THE INVENTION

Generally, control circuits such as control-ICs (integrated circuits) of SMPS need a certain supply voltage in order to start their operation. Usually the control-IC starts operation only after a certain threshold voltage has been reached at its supply pins. Typically a start-up circuit is provided which supplies a first amount of energy in order to start the operation of the control-IC. During normal operation typically the SMPS provides the supply of the control IC, e.g. by an additional winding on a magnetic component. (e.g., an additional winding on the transformer of a flyback).

As long as the control-IC does not operate, especially does not need to drive the power switch, the power consumption of the control-IC is very small. Nevertheless a capacitor connected to the supply pins or terminals (VCC and ground) of the control-IC has to be charged with a minimum current under all circumstances even at the lowest input voltage of the power conversion system.

As an example, the power may be provided using a bleeder resistor which may e.g., be connected in series with a high voltage switch which is switched off in case of normal operation of the SMPS. Alternatively, a high voltage startup current source may be incorporated inside a high voltage integrated circuit, HV IC, e.g. with a junction field effect transistor, FET, that is off during normal operation.

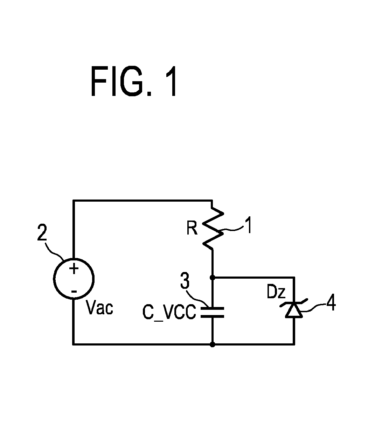

Fig. 1 shows an exemplary start-up circuit using a start-up resistor 1. The start-up circuit of Fig. 1 comprises the resistor 1 connected to high potential of an input voltage source 2 and a capacitor 3 connected from the other end of the resistor 1 to ground. A parallel zener diode 4 prevents the capacitance voltage from reaching too high values in case of fault conditions. The zener diode 4 may be integrated in the control IC.

This exemplary start-up circuit has disadvantages in so far as the resistor 1 causes losses not only during start-up but also during the normal operation of the power supply. These losses are high especially in applications with a wide input voltage range (e.g. universal mains) because the resistor 1 has to be small enough to allow start-up even at the lowest input voltage. Under normal input voltage condition (especially at the high mains input voltage) this resistor 1 causes continuous energy losses, decreasing the efficiency of the SMPS especially under part load and during stand-by. These operation modes receive more and more attention in order to reduce overall electric energy consumption. When considering to simply switch off the resistor once it is no longer needed, the drawback of an additionally needed high voltage switch and its driving stage results, adding costs and components.

In another start-up circuit, a start-up current source may be provided which draws current from the input voltage. This current source is typically switched off once the voltage at a voltage terminal such as VCC reaches a level high enough to allow the SMPS to operate properly. Such a start-up circuit has the same drawback of an additionally needed high voltage circuitry for switching off the current source, adding costs and components.

### SUMMARY OF THE INVENTION

It is an object of the present invention to provide a power conversion system and start-up circuit with reduced additional losses.or without any additional losses.

More particular, the invention aims at the improvement of a start-up circuit for power conversion systems, in particular of a start-up circuit or system of a switched mode power supply, SMPS.

A further object of this invention is to reduce and/or even eliminate the above disadvantages.

In a first aspect of the present invention a power conversion system, in particular a switched mode power supply, SMPS, is presented that comprises a control circuit and a rectifier circuit connectable to an alternating main power supply wherein the rectifier circuit is directly connected to the control circuit for supplying the control circuit with rectified power.

In a further aspect of the present invention, a start-up circuit is presented which may preferably be used in or for a power conversion system such as a switched mode power supply optionally according to the above first aspect wherein the start-up circuit comprises a first capacitor connectable to, or connected with, a control circuit of the power conversion system such as a switched mode power supply for providing a start-up voltage, and a rectifier circuit configured to be connectable to, or connected with, an alternating main power supply for charging the first capacitor.

In accordance with another aspect of the invention, a method of operating a switched mode power supply, SMPS, comprising a control circuit is provided, comprising: connecting a rectifier circuit to an alternating main power supply, directly connecting the rectifier circuit to the control circuit, and supplying the control circuit with rectified power by means of the rectifier circuit.

Preferred embodiments of the invention are defined in the dependent claims. It shall be understood that the power conversion system of claim 1, the start-up circuit of claim 11 and the method of claim 15 may have similar and/or identical preferred embodiments as defined in the dependent claims.

In accordance with one or more embodiments of the invention the power conversion system such as the switched mode power supply may comprise a start-up circuit having a first capacitor connected to the control circuit for providing a start-up voltage, wherein the rectifier circuit comprises at least one of a half wave rectifier configured to charge the first capacitor only in the positive or negative half cycle of the alternating main power supply, or a full wave rectifier configured to charge the first capacitor in both the positive and negative half-cycles of the alternating main power supply. The capacitor can therefore rapidly be charged allowing quick start.

In accordance with one or more embodiments of the invention the rectifier circuit comprises a lossless current source which may optionally be implemented by means of at least one second capacitor. The start-up circuit therefore does not produce losses during start-up and normal operation of the power supply.

In accordance with one or more embodiments of the invention the rectifier circuit is connected to at least one high ohmic resistor. Such resistor may already be provided due to other reasons such as being part of an input filter such as an electromagnetic filter. The start-up circuit is hence featured by a simple and yet effective structure.

Further, in accordance with one or more embodiments of the invention an electromagnetic interference filter may be provided having at least one third capacitor, wherein said at least one high ohmic resistor is configured to discharge the at least one third capacitor of the electromagnetic interference filter in case of disconnecting the electromagnetic interference filter from the alternating main power supply. The resistor is therefore used for double purpose of discharge of the filter capacitor and charge of the capacitor of the start-up circuit.

In accordance with one or more embodiments of the invention the switched mode power supply may comprise an additional current limiting resistor wherein a charging current of the first capacitor is configured to flow via a series combination of the at least one high ohmic resistor and the additional current limiting resistor. A simple circuit configuration with reduced losses is therefore provided.

In accordance with one or more embodiments of the invention the switched mode power supply may comprise an additional auxiliary supply connected to the control circuit and to the rectifier circuit for delivering energy to the control circuit. Such an additional auxiliary power supply allows rapid start of the power supply using a small supply capacitor of the start-up circuit.

In accordance with one or more embodiments, the power conversion system may comprise a flyback with power factor correction, PFC. The flyback may comprise a flyback winding and may be configured to take over within one single switching cycle, preferably with the forward stroke of the flyback. Therefore, the take over can be completely finished already at the first turn-on of power conversion system, providing rapid speed of the start-up. The take over with the forward stroke in case of a flyback with PFC upfront is a special benefit because already at the first turn-on of the system, the take over is completely finished. For a normal flyback winding this would take several switching cycles as the complete capacitances of all outputs and the load have to be charged.

In accordance with one or more embodiments, the power conversion system may comprise at least one of at least zener diode for clamping; at least one rectifier diode. The at least one zener diode, or the at least one rectifier diode, or both of the at least one zener diode for clamping, and the at least one rectifier diode may optionally be implemented in the control circuit. The control circuit may be implemented in this and other embodiments as an integrated circuit, allowing to integrate the zener diode(s) and the rectifier diode(s) into the control circuit and thus to provide high reliability and reduced production effort.

In accordance with one or more embodiments of the invention the switched mode power supply may comprise an additional rectifier connected between the alternating main power supply and components of the switched mode power supply for delivering energy to the switched mode power supply. At least during the start-up phase, the control circuit such as the control-IC may therefore be supplied via a path in parallel to the energy supply of the switched mode power supply, contributing to a rapid overall start of the system.

In accordance with one or more embodiments of the invention the additional rectifier is connected to the rectifier circuit. This additional rectifier may therefore be used for carrying some of the voltage or current of the rectifier circuit, thus being able to decrease the start-up time or the complexity of the rectifier circuit.

In accordance with one or more embodiments of the invention the start-up circuit may comprise at least one of: a lossless current source; at least one second capacitor connected between the rectifier circuit and the alternating main power supply; a connection to at least one resistor; and a current limiting resistor.

Embodiments of the present invention solve the start-up problem without the use of additional high voltage switches. The needed start-up voltage can be generated without causing additional losses. Embodiments of the present invention allow to provide startup energy to the controller without adding dissipation.

At least some or all embodiments of the invention generally provide a start-up circuit without additional losses. More particularly, embodiments provide a start-up circuit for powering the controller in an off-line power supply such as SMPS without additional losses.

In accordance with one or more embodiments of the invention, at start-up of a power supply such as SMPS the controller can be supplied with power without any unnecessary losses. More specifically, in case of a fully standalone power supply this power can be derived from the mains voltage without any unnecessary losses. Embodiments of the invention are hence able to fulfill present and future requirements for ultra low power consumption.

In accordance with one or more embodiments, the advantage of extremely low losses in an off-line SMPS is achieved, in particular when operating at no load.

Further, in accordance with one or more embodiments, it is possible to use a charge pump, which is basically a low cost loss free current source. In another embodiment, it is possible to reuse a resistor that is provided or necessary to discharge an across-the-lines capacitor, also termed X-cap, at the input filter.

In accordance with another implementation, the rectifier circuit of the switched mode power supply or start-up circuit is configured to utilize at least one already available high ohmic resistor.

In accordance with one or more embodiments of the invention the voltage of the first capacitor which is the supply capacitor may be clamped to a maximum level. The voltage of the supply capacitor may be clamped to a maximum level by means of a zener diode in parallel to the supply capacitor either external or internal to the control circuit, i.e. the control-IC.

In the following, embodiments of the invention will be described in more detail with reference to the drawings.

### DETAILED DESCRIPTION OF THE INVENTION

The present invention is further elucidated by the following figures and examples, which are not intended to limit the scope of the invention. The person skilled in the art will understand that various embodiments may be partially or completed combined.

### BRIEF DESCRIPTION OF THE DRAWINGS

These and other aspects of the invention will be apparent from and elucidated with reference to the embodiment(s) described hereinafter. In the following drawings
Fig. 1 illustrates a prior art start-up circuit,
Fig. 2 shows an embodiment of a start-up circuit in accordance with the invention,
Figs. 3a, 3b, 3c depict waveforms occurring at the start-up circuit of Fig. 2,
Fig. 4 shows another embodiment of a start-up circuit in accordance with the invention which uses a capacitive current source,
Fig. 5 illustrates a further embodiment of a start-up circuit in accordance with the invention which comprises a start-up current source,
Figs. 6a, 6b, 6c depict waveforms occurring at the start-up circuit of Fig. 5,
Fig. 7 shows another embodiment of a start-up circuit in accordance with the invention which comprises an additional auxiliary supply.

### DETAILED DESCRIPTION OF THE DRAWINGS

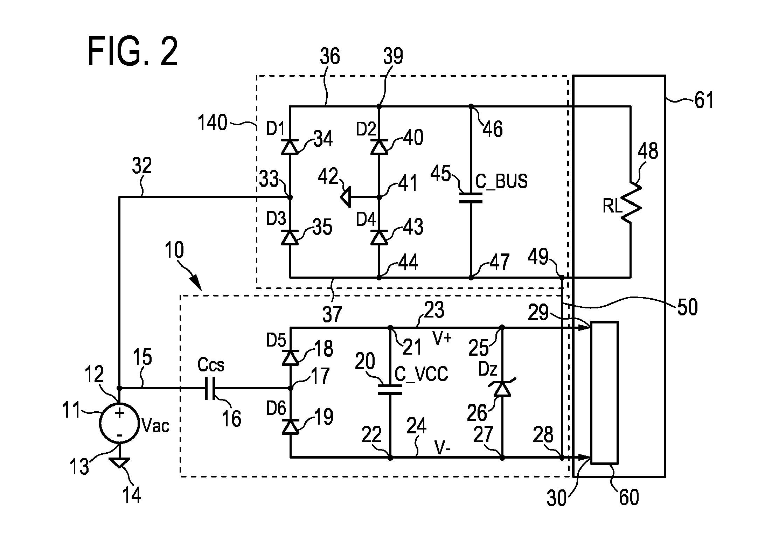

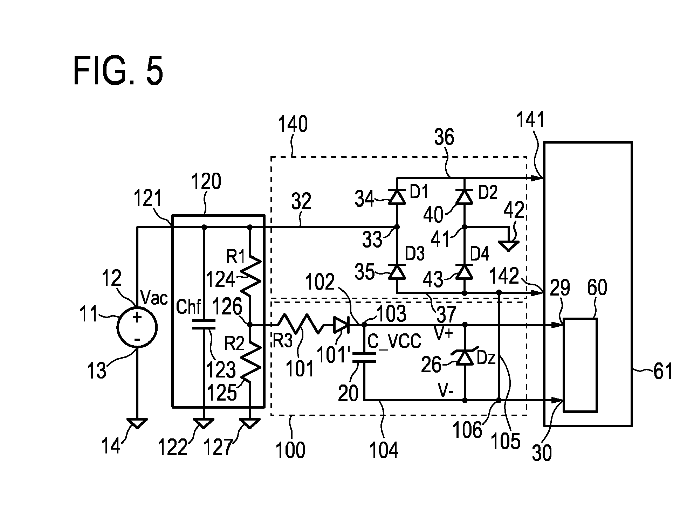

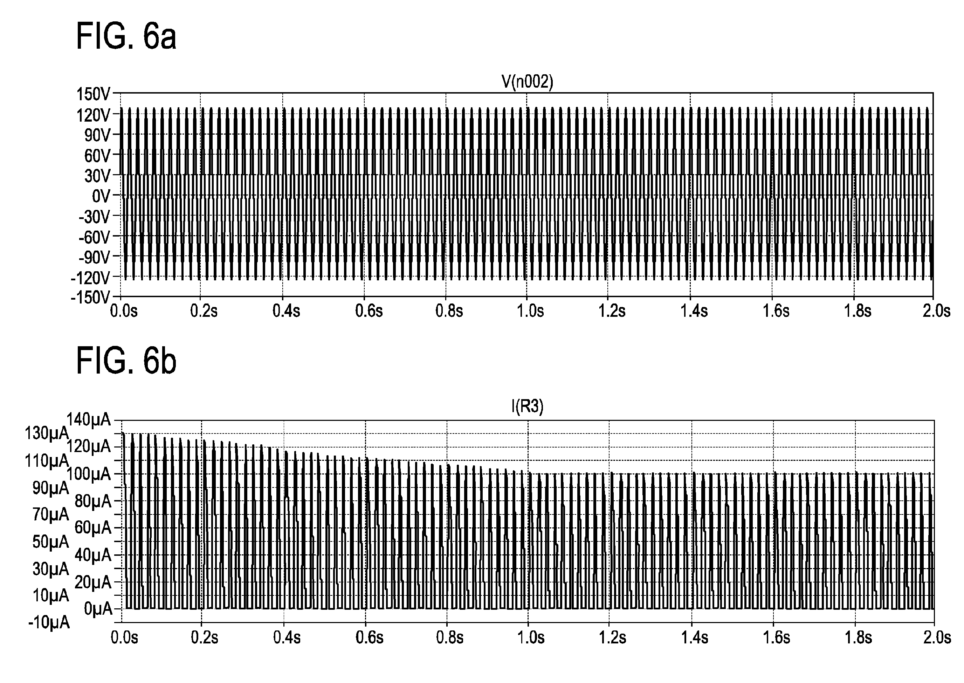

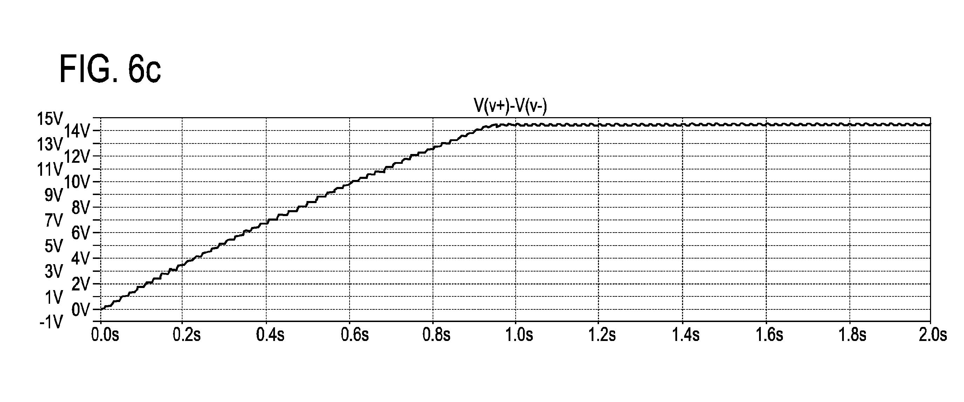

In accordance with the embodiments of the invention shown in Figs. 2 to 4 and 7, an aim of the invention of improving the start-up circuit for power conversion systems, in particular of the start-up system of switched mode power supplies (SMPS), reducing and/or even eliminating losses with simple configuration, is achieved by providing the needed start-up voltage via lossless components, like inductors or capacitors. In accordance with the embodiments of the invention shown in Figs. 5, 6, this aim of the invention is achieved by coupling the start-up circuit to lossy elements (e.g. resistors) that are already necessary or provided for other purposes.

Fig. 2 depicts an embodiment to solve the above problem using lossless components. In this embodiment, the start-up circuit uses a capacitive current source.

The embodiment of a start-up circuit 10 shown in Fig. 2 comprises a main power supply (mains) 11 generating an alternating voltage Vac (alternating current). The main power supply 11 comprises voltage output terminals 12, 13 for outputting the generated or provided main power. The terminal 13 is connected to a ground terminal 14 connecting the main power supply (mains) 11 and further components of the start-up circuit 10 to ground potential or any other suitable reference potential. The terminal 12 is connected to an electric conductor or line 15 comprising a capacitive current source 16 which may be formed by a capacitor Ccs connected in series between terminal 12 and a connecting point 17. The connecting point 17 is connected to a rectifier circuit which comprises diodes 18, 19 and is connected to input terminals 29, 30 of a control integrated circuit (control-IC) 60 of a power supply 61, in particular a switched mode power supply, SMPS schematically shown in Fig. 2. In the context of this invention the term power supply is used for the power supply stages after the rectifiers. Optionally, in other embodiments of the invention, the power supply may include at least one, or all, of the front-end stages like EMI filter and rectifier. The rectifier circuit connected to connecting point 17 and therefore to the capacitive current source 16 comprises diode 18 having its anode connected to connecting point 17 and its cathode to input terminal 29 via a connecting line 23 having connecting points 21, 25. The rectifier circuit furthermore comprises a diode 19 having its cathode connected to connecting point 17 and its anode connected to input terminal 30 of the control-IC 60 via a connecting line 24 which comprises connecting points 22, 27. A main capacitor 20, C_VCC provides the start-up voltage in addition to the voltages provided by the rectifier circuit 18, 19 to the connecting lines 23, 24. The main capacitor 20 is connected between the lines 23, 24 by means of the connecting points 21, 22, as shown in Fig. 2. The connecting line 23 carries the positive potential V+ of the DC voltage occurring at lines 23, 24 whereas line 24 provides the negative potential V- of the DC voltage.

Furthermore, a Zener diode 26 is connected in parallel to the main capacitor 20 and is connected to the lines 23, 24 via the connecting points 25, 27.

Optionally, the power supply 61 may comprise a further rectifier 140 such as a full-wave bridge rectifier comprising diodes 34, 35, 40, 43. A tap or connecting point 33 between the cathode of diode 35 and the anode of diode 34 is connected to terminal 12 of the main power supply 11 by means of an electric line 32. The full-wave rectifier additionally comprises the diodes 40, 43 which are provided in parallel to the diodes 34, 35. A tap or connecting point 41 between the cathode of diode 43 and the anode of diode 40 is connected to the reference potential provided at the terminal 14 of the main power supply 11 by means of a terminal 42. A connecting line 36 connecting the cathodes of diodes 34, 40 by means of a connecting point 39 is furthermore connected to a capacitor 45 by means of a connecting point 46. The capacitor 45 is connected between terminals 46, 47 and therefore between the lines 36, 37. The capacitor 45 is provided in parallel to the full-wave bridge rectifier 34, 35, 40, 43 and has its other terminal connected to a connecting point 47 connected to line 37. The capacitor 45 may serve for providing a voltage to other parts of the power supply 61 such as the switched mode power supply. The capacitor 45 may for example provide the voltage power supply for a bus of the power supply 61, or other components of the power supply 61. In Fig. 2, the bus or other components are schematically represented by a load resistor 48 connected in parallel to the capacitor 45 and thus in parallel to the full-wave bridge rectifier 34, 35, 40, 43. The upper end of the load resistor 48 is connected to line 36 whereas the lower end of resistor 48 is connected to the line 37 by means of a connecting point 49. The connecting point 49 and thus line 37 is connected to line 24 and therefore the input terminal 30 of the control-IC 60 by means of an electric line or conductor 50 connecting terminals 49 and 28.

In another configuration, the polarities of the diodes shown in Fig. 2 may also be reversed depending on the polarities of the voltages, diode types etc.

The circuit 10 in Fig. 2 resembles a capacitive current source. The current is limited by the value of the capacitor 16, Ccs. Its capacitance only needs to be large enough to charge the capacitor 20, C_VCC, to the necessary start-up voltage within the start-up time required by the application. Thus capacitor 16, Ccs, can be a very small capacitor. When the input voltage rises from its negative peak to its positive peak, the capacitor 16, Ccs, is recharged via the diode 18, D5, capacitor 20, C_VCC, and the upper main diode bridge comprising the diodes 34,35,40,43. At the voltage swing from positive to negative peak the recharging current flows additionally through the diode 19, D6, and the upper main diode bridge comprising the diodes 34, 35, 40, 43. The capacitor 20, C_VCC, is connected to the supply pins or terminals 29, 30 of the control IC 60. the Zener diode 26, Dz, represents a voltage limiting zener clamp that may also be, and typically is, integrated in the control IC 60. In the embodiment of Fig. 2, the corresponding zener diode 26 is placed in parallel to the capacitor 20, C_VCC.

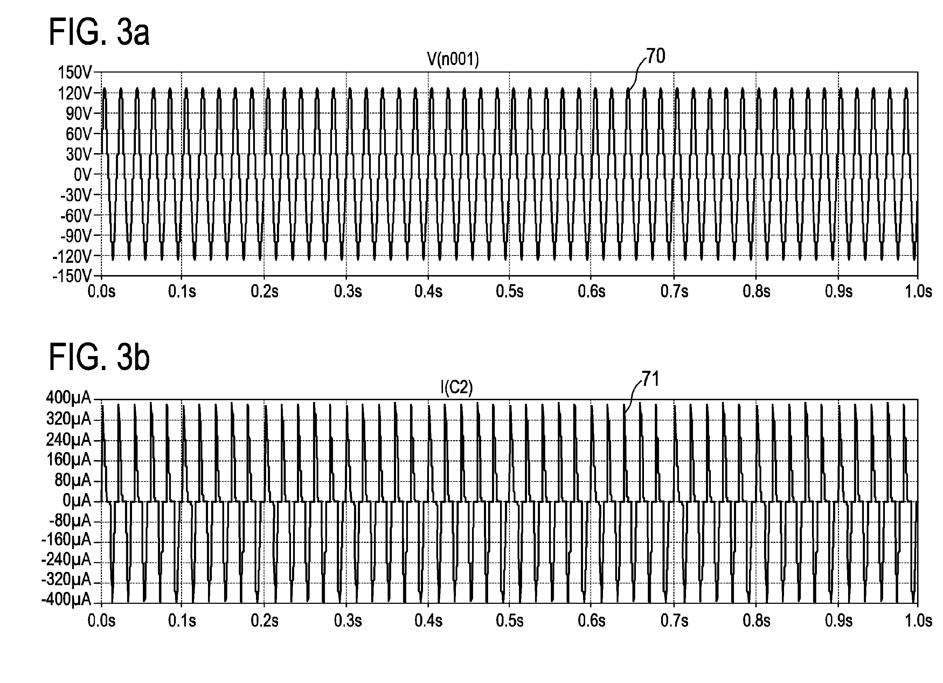

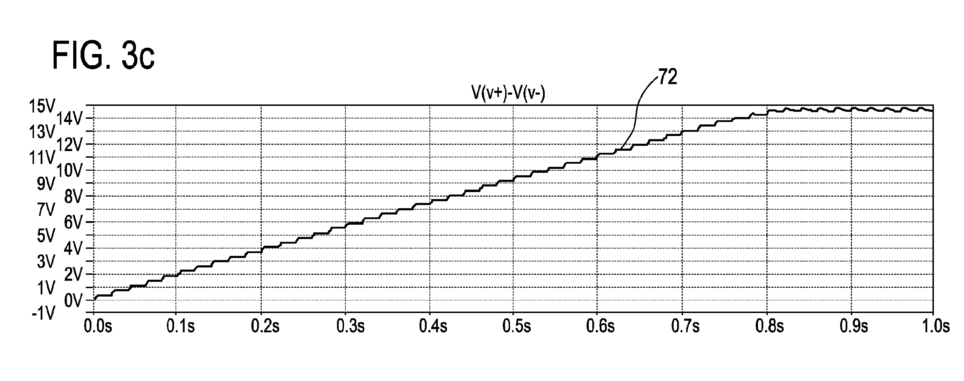

Fig. 3 consisting of Figs. 3a, 3b, 3c shows waveforms occurring at the circuit of Fig. 2. More specifically, Figs. 3a, 3b, 3c show a start-up process simulated using the circuit shown in Fig. 2. The upper curve 70 of Fig. 3a shows the AC input voltage provided by the main power supply 11. The curve 71 of Fig. 3b in the middle part of Fig. 3 depicts the charging current through the capacitor 16, Ccs. The lower curve 72 of Fig. 3c represents the voltage VCC across the main capacitor 20. As can be seen the voltage across the main capacitor 20 C_VCC reaches for the chosen example its clamp level of 15V in approximately 0.8s.

In the embodiment of Fig. 2, only one half of the input sine wave represented by curve 70 is used to charge the main capacitor 20, C_VCC. Depending on the application a recharging current may flow through the capacitor 45, C_BUS, resulting in an ever increasing bus voltage in the rare case of absolute no-load of the mains of the switched mode power supply 60.

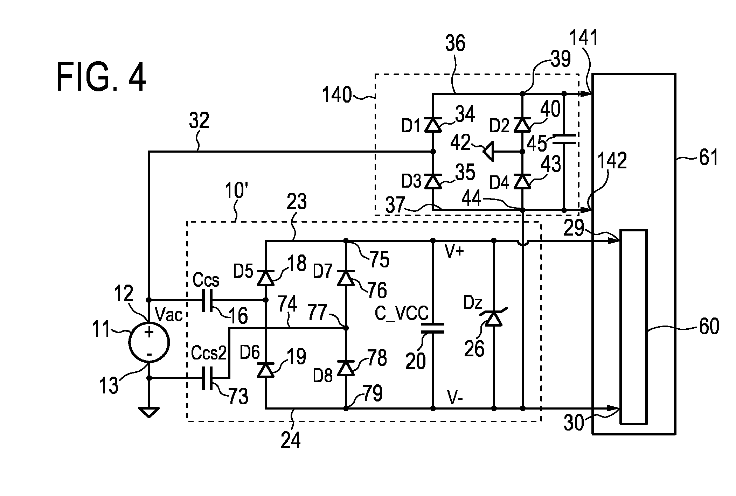

Both circumstances can be avoided for example using the second embodiment of a start-up circuit depicted in Fig. 4. Same elements as in Fig. 2 are designated using the same reference numerals. The above explanations regarding Figs. 2, 3 likewise apply to the embodiment of Fig. 4, in particular regarding elements having the same reference numerals.

Fig. 4 illustrates a start-up circuit 10' using a full-wave bridge rectifier 18, 19, 76, 78 between the terminals 12, 13 of the main power supply 11 and the input terminals 29, 30 of the control circuit 60. In this embodiment, the capacitive current source comprises the capacitor 16, an additional capacitor 73, the diodes 18, 19, and additional diodes 76, 78. The additional capacitor 73 is serially connected, by means of line 74, between the negative or lower terminal 13 of the main power supply 11 and a connecting point 77 between the series-connected diodes 76, 78. The diode 76 is connected via its cathode to the positive output voltage line 23 and with its anode to the connecting point 77. The diode 78 is connected via its cathode to the connecting point 77 and with its anode to the negative output voltage line 24. The diodes 76, 78 are therefore arranged in parallel to the diodes 18, 19, with the connecting points 77, 17 being connected to the output terminals of power supply 11. The diodes 18, 19, 76, 78 therefore provide a full-wave rectifier as compared to the half-wave rectifier of Fig. 2 formed by diodes 18, 19. The rectifier 140 comprises the elements already described with regard to Fig. 2, and additionally comprises output terminals 141, 142 which are connected to the lines 36, 37 respectively and supply the rectified voltage generated by the rectifier circuit 140 to inputs of the power supply 61. The power supply 61 may incorporate elements as schematically represented in Fig. 2 with the load resistor 48, and may have customary structure of a switched mode power supply known to the skilled person.

In the embodiment of Fig. 4, thus both the positive as well as the negative halves of the input sine wave represented by curve 70 are used to charge the main capacitor 20, C_VCC. Further, the bus voltage provided between the connecting points 39, 44 by capacitor 45, C_BUS, is limited even in the rare case of absolute no-load of the mains of the switched mode power supply 61

Waveforms are very similar to those of Fig. 3 and are therefore not duplicated. However, the charging time of the voltage across the capacitor 20, C_VCC, will only be half if for capacitor 16, Ccs, and capacitor 73, Ccs2, the same capacitance value as in the circuit of Fig. 2 (for capacitor 16) is used, leading to double charging speed and thus very quick start-up.

Fig. 5 depicts a further embodiment of a start-up circuit 100 for power conversion systems, in particular a start-up system of switched mode power supplies (SMPS) in accordance with the invention. This embodiment is featured by a simple configuration having reduced and/or even eliminated losses. In this embodiment the start-up circuit is coupled to lossy elements (e.g. resistors) that are already necessary or provided for other purposes.

The embodiment shown in Fig. 5 comprises an EMI, electromagnetic interference, filter 120 having its first input terminal 121 connected to the first terminal 12 of the main alternating power supply 11, and its second terminal or reference potential terminal 122 connected to reference potential or ground terminal 14 which is directly connected to the second terminal of the main alternating power supply 11. The EMI filter 120 is connected to the line 32 connecting tap 33 of the bridge rectifier consisting of diodes 34, 35, 40, 43 of rectifier circuit 140 to the positive terminal 12 of the main power supply 11. The EMI filter 120 comprises a capacitor 123 which is connected between the line 32 and the reference potential terminal 122, and is furthermore connected in parallel to resistors 124, 125. The resistors 124, 125 are serially connected between the line 32 and a terminal 127 connected to reference potential such as ground potential.

The start-up circuit 100 comprises an optional resistor 101 connected between the connecting point 126 between the resistors 124, 125 of the EMI filter 120, on the one hand, and a line 102 and a connecting terminal 103 of the start-up circuit 100. The connecting terminal 103 is connected to capacitor 20, C_VCC, providing the start-up voltage and being connected with its other terminal to a line 104 supplying negative potential V- to input terminal 30 of the control circuit 60 (control-IC) of the power supply 61, e.g. switched mode power supply. The line 102 carries positive potential and is connected to input terminal 29 of the control circuit 60. The Zener diode 26 is connected in parallel to capacitor 20, as shown, similar to the other embodiments shown in the other drawings.

Line 104 carrying negative voltage is connected by means of a connecting point 106 and a conductor 105 to the line 37 of the full wave bridge rectifier 140. The rectifier 140 comprises the elements already described with regard to Figs. 2 and 4, and additionally comprises output terminals 141, 142 which are connected to the lines 36, 37 respectively and supply the rectified voltage generated by the rectifier circuit 140 to inputs of the power supply 61. The power supply 61 may have customary structure of a switched mode power supply known to the skilled person, and may include the elements schematically represented in Fig. 2 with the resistor 48.

Similar to the other embodiments, the polarities of the diodes and other components may be reversed depending on the polarities of the main power supply or other parameters, as appropriate.

Further, in this or other embodiments, an additional diode, similar to diode 18 of Fig. 2, may be inserted in series to, or instead of, the resistor 101 so as to charge capacitor 20 only during positive voltages. This diode may e. g. be inserted between connecting point 126 and the connecting point 103 in front of, or subsequent to, or in place of, resistor 101.

Due to safety reasons, at least one discharge resistor 124, 125 is connected in parallel to the one or more capacitances 123, Chf, of the EMI filter 120 placed before the rectifier 140 which may e.g. be implemented as full-wave or bridge rectifier. This discharge resistor 124, 125 may, due to the allowable voltage level of cost effective resistors, be built up by a series combination of two or more resistors like resistors 124, 125 shown in Fig. 5. While these resistors 124, 125 also produce additional losses they are provided due to safety reasons since the capacitor 123, Chf, has to be discharged to an acceptable voltage level within a predetermined time. The diodes 34, 35, 40, 43 represent the full wave rectifier 140 used to supply the input voltage V_{AC} of power supply 11 to the DC-DCstage of the power conversion system 61 (comment.. GH). In this and the other embodiments, the diode 43, D4, is optionally used during the charging process of the main capacitor 20, C_VCC, at start-up. The resistors 124, 125 may be chosen as high as possible to fulfill the safety requirements. Nevertheless this current flowing through resistors 124, 125 is high enough to be used for charging the capacitor 20, C_VCC, via the shown additional circuit elements such as resistor 101, and diode 101' in series with, or replacing, resistor 101. The resistor 101, R3, provides an additional possibility to limit the charging current of capacitor 20 to a desired value. The parallel zener diode 26, Dz, may also be provided inside the control IC 60. This circuit of Fig. 5 charges the capacitor 20, C_VCC, for positive mains voltages via resistor 124, resistor 101, diode 101' if provided, capacitor 20, and diode 43, D4.

Fig. 6 consisting of Figs. 6a, 6b, 6c depicts the relevant waveforms. Fig. 6a shows the input voltage Vac generated by the mains power supply 11. Fig. 6b depicts the current I(R3) flowing through resistor 101. Fig. 6c shows the voltage across the main capacitor 20, C_VCC. It can be seen that the voltage level of the clamping zener diode 26 is reached in approximately Is.

For all embodiments shown in the drawings the supply of the control circuit 60 may be taken over from the power supply, SMPS, 61 during normal operation.

In accordance with one or more embodiments of the invention, a second smaller C_VCC may be used that has just enough capacitance and thus energy to allow for the start-up. This feature leads to shorter start-up times and/or smaller capacitance value of the one or more current source(s) formed by capacitor(s) 16, 73, Ccs and Ccs2.

The takeover interval during start-up depends on the way in which the capacitor 20 providing the start-up voltage V_{CC} and thus serving as output capacitor is supplied by the converter. Using for example a flyback converter without power factor correction, PFC, the voltage at the auxiliary winding, aux winding, is related to the output. Then the takeover interval is determined by the time necessary to charge the output capacitor 20 in parallel to all output capacitors of the flyback (not shown). If a PFC is used, giving a more fixed input voltage, it is also possible to use e.g. an auxiliary winding of the flyback charging the Vcc capacitor 20 during the primary stroke. Further, it is possible to use any other means for assisting in charging the capacitor 20 or providing additional start-up power at the terminals 29,30.

The value of the Vcc capacitor 20 is however not only determined by the start-up takeover interval, but also by the minimum operating frequency at minimum load, as during almost the complete period time the capacitor 20 is not charged, while the circuitry will discharge the capacitor 20. Especially when burst mode is used the period time can easily be as large as 10 milliseconds or longer. Another criterion is the fact that at low power levels the total charge during a switching period has to be delivered during a relatively short interval, giving high currents in the capacitor 20. This requires the value for the equivalent series inductance, ESL, and the equivalent series resistance, ESR, to be lower than a certain maximum.

Result from these considerations is that the minimum value for the capacitor 20 can be smaller if only startup has to be taken into account, leading to shorter capacitive charging time from the main power supply (AC mains) 11.

Using this conclusion embodiments of the start-up circuit can be adapted in such a way that the smallest possible value necessary for start-up is applied for the capacitor 20, C_VCC, and an additional larger capacitor 165 is charged from a takeover supply of the switched mode power supply, SMPS, 61.

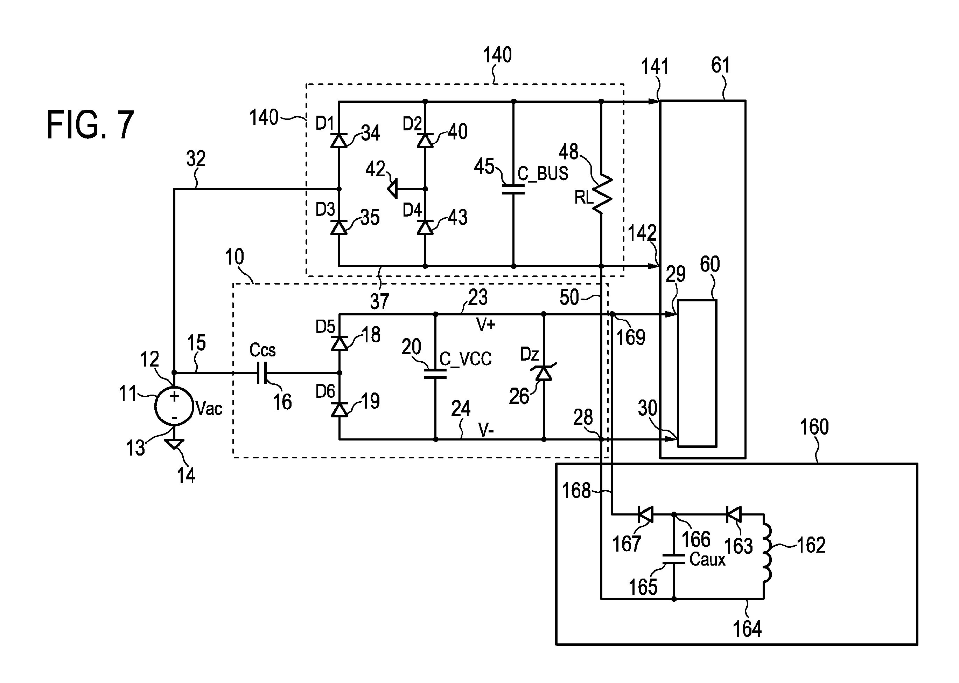

An embodiment implementing this addition is shown in Fig 7. This addition also holds for the other embodiments and schematics presented in this specification. The auxiliary supply can be any kind of supply that delivers energy supplied from the power supply, SMPS, 61. The additional auxiliary supply 160 depicted in Fig. 7 as an example is able to reduce the value for capacitor 20 and to reduce the startup time.

The embodiment of the start-up circuit 10 depicted in Fig. 7 applies a smallest possible value necessary for startup for the capacitor 20, C_Vcc, and comprises the additional larger capacitor 165 as shown in Fig. 7, e.g. an electrolytic capacitor, elcap. The larger capacitor 165 is charged from a takeover supply of the switched mode power supply, SMPS, 61. This larger capacitor 165 furthermore is connected via a diode 167 or any other switching element to the capacitor 20, C_VCC.

In the embodiment of Fig. 7, an auxiliary power or voltage supply 160 is provided which comprises this larger capacitor 165. The charging current of the capacitor 165 is generated by a winding 162 connected with its one terminal to ground or reference potential, e.g. to a line 164, and with its other terminal via a diode 163 to a terminal 166 connected to the capacitor 165. The other terminal of the capacitor 165 is connected to V- or reference potential, e.g. to line 164.. In the embodiment shown in Fig. 7, the line 164 is connected to the line 24 e.g. via a connection to terminal 28. The winding 162 may e.g. be formed by an auxiliary winding of e.g. a flyback converter or may magnetically be coupled to a winding or an auxiliary winding of the flyback converter or other component of the switched mode power supply 61.

In the embodiment of Fig. 7, the auxiliary supply 160 further comprises the diode 167 or other type of rectifier or switching element etc. The diode 167 has its anode connected to connecting point 166 and its cathode to a conductor 168. The conductor 168 connects the auxiliary output voltage generated by the auxiliary supply 160 via a connecting point 169 connecting the conductor 168 and the line terminal 23, to the input terminal 29 of the control circuit 60. Therefore, the auxiliary voltage generated by the auxiliary supply 160 is added in parallel to the start-up voltage generated by the start-up circuit 10 and more particular by the capacitor 20, allowing to decrease the capacitance requirements of the capacitor 20.

The present invention can be applied to all power supplies operating from the mains, e.g. a main alternating power supply, such as e.g. power supplies of computers, e.g. personal computers, PC, laptops, etc, adapters, liquid crystal display television, LCD TV, and monitors, other consumer electronics, CE, equipment and evt. lighting ballasts, high voltage IC's, etc. Further, embodiments of the invention may be used e.g. in or for all off-line SMPS, optionally including PFC circuits, or all SPMS circuits that e.g. need to have extremely low or no load power consumption.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single component or other unit may fulfill the functions of several items recited in the claims. The mere fact that certain measures are recited in mutually different dependent claims does not indicate that a combination of these measured cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. A power conversion system, in particular a switched mode power supply, SMPS, comprising a control circuit (60) and a rectifier circuit (18, 19, 76, 78, 101') connectable to an alternating main power supply (11) wherein the rectifier circuit (18, 19, 76, 78, 101') is directly connected to the control circuit (60) for supplying the control circuit (60) with rectified power.

2. A power conversion system according to claim 1, comprising a start-up circuit (10, 10', 100) having a first capacitor (20) connected to the control circuit (60) for providing a start-up voltage, wherein the rectifier circuit (18, 19, 76, 78, 101') comprises at least one of a half wave rectifier (18, 19) configured to charge the first capacitor (20) only in one half cycle of the alternating main power supply (11), or a full wave rectifier (18, 19, 76, 78) configured to charge the first capacitor (20) in both half-cycles of the alternating main power supply (11).

3. A power conversion system according to claim 1 or 2 wherein said rectifier circuit (18, 19, 76, 78, 101') comprises a lossless current source (16, 73).

4. A power conversion system according to claim 3 wherein said lossless current source (16, 73) is implemented by means of at least one second capacitor (Ccs, Ccs2).

5. A power conversion system according to claim 1 wherein said rectifier circuit (18, 19, 76, 78, 101') is connected to at least one high ohmic resistor (124, 125).

6. A power conversion system according to claim 5, comprising an electromagnetic interference filter (120) having at least one third capacitor (123), wherein said at least one high ohmic resistor (124, 125) is configured to discharge the at least one third capacitor (123) of the electromagnetic interference filter (120) in case of disconnecting the electromagnetic interference filter (120) from the alternating main power supply (11).

7. A power conversion system according to claim 6, comprising an additional current limiting resistor (101) wherein a charging current of the first capacitor (20) is configured to flow via a series combination of the at least one high ohmic resistor (124, 125) and the additional current limiting resistor (101).

8. A power conversion system according to any one of the preceding claims, comprising an additional auxiliary supply (160) connected to the control circuit (60) and to the rectifier circuit (18, 19, 76, 78) for delivering energy to the control circuit (60).

9. A power conversion system according to any one of the preceding claims, comprising a flyback with power factor correction, the flyback comprising a flyback winding (162), configured to take over within one single switching cycle, preferably with the forward stroke of the flyback, wherein already at the first turn-on of power conversion system, the take over is completely finished.

10. A power conversion system according to any one of the preceding claims, comprising at least one of:
at least zener diode (26) for clamping,
at least one rectifier diode (18, 19),
wherein the at least one zener diode (26), or the at least one rectifier diode (18, 19), or both of the at least one zener diode (26) for clamping, and the at least one rectifier diode (18, 19) are implemented in the control circuit (60).

11. A power conversion system according to any one of the preceding claims, comprising an additional rectifier (140) connected between the alternating main power supply (11) and components of the switched mode power supply (61) for delivering energy to the switched mode power supply (61).

12. A power conversion system according to claim 11, wherein said additional rectifier (140) is connected to the rectifier circuit (18, 19, 76, 78).

13. A start-up circuit, preferably for use with or in a power conversion system, in particular a switched mode power supply, according to any one of the preceding claims, the start-up circuit (10, 10', 100) comprising a first capacitor (20) connectable to a control circuit (60) of the power conversion system, in particular switched mode power supply (61), for providing a start-up voltage, and a rectifier circuit (18, 19, 76, 78) configured to be connectable to an alternating main power supply (11) for charging the first capacitor (20).

14. A start-up circuit according to claim 13, comprising at least one, more or all of:
a lossless current source (16, 73),
a second capacitor (Ccs, Ccs2) connected between the rectifier circuit (18, 19, 76, 78) and the alternating main power supply (11),
a connection to at least one resistor (124, 125) of an input filter (120),
a current limiting resistor (101), and
a diode (101').

15. A method of operating a power conversion system, in particular a switched mode power supply, SMPS, comprising a control circuit (60), comprising:
connecting a rectifier circuit (18, 19, 76, 78, 101') to an alternating main power supply (11), directly connecting the rectifier circuit (18, 19, 76, 78, 101') to the control circuit (60), and supplying the control circuit (60) with rectified power by means of the rectifier circuit (18, 19, 76, 78, 101').
